# EUROPEAN PATENT APPLICATION

(11) **EP 2 554 232 A1**
(43) Date of publication of application: **06.02.2013**
(21) Application number: 10849069.9
(22) Date of filing: 29.09.2010
(51) Int. Cl.: B01D 35/04, B01D 35/30

(54) **WATER STORAGE AND DISCHARGE APPARATUS**

(30) Priority: 30.03.2010 KR 20100028643
(71) Applicant: Woongjin Coway Co., Ltd., Choongcheongnam-do 314-895 (KR)
(72) Inventor: PARK, Kwon-Il, Seoul 151-851 (KR); NOH, Jin-Hwan, Seoul 151-851 (KR); LEE, Eung-Sam, Seoul 151-851 (KR); KANG, Ji-Hoon, Seoul 151-851 (KR)
(74) Representative: Hutter, Jacobus Johannes
(86) International application number: PCT/KR2010/006610
(87) International publication number: WO 2011/122747

(57) **Abstract**

Disclosed is a water storage and discharge apparatus capable of discharging the water stored irrespective of the height of a water discharge member such as a cock, a faucet or the like.

The water storage and discharge apparatus according to one embodiment of the present invention comprises: a storage tank (200) for storing the inflow of water, connected to an inlet pipe (210) for the inflow of water and connected to an outlet pipe (220) for the outflow of water stored; a discharge member (300) for discharging the water to the outside stored in the storage tank (200) to the outside, connected to the outlet pipe (220); and a pressure maintenance means (400) for maintaining the pressure of the storage tank (200) to be at atmospheric pressure or higher, thereby enabling the discharge of water through the discharge member (300) irrespective of the height of the discharge member (300), comprising a pump (410) connected to the storage tank (200) and a pressure sensor (420) for sensing the pressure inside the storage tank (200).

By this constitution, the present invention can discharge the water stored irrespective of the height of a discharge member such as a cock, a faucet or the like, can freely adjust the height of a discharge member such as a cock, a faucet of the like, can place a discharge member such as a cock, a faucet or the like at a height at which it is convenient for a user to use the discharge member, can discharge the water stored in a storage tank, the water heated in a hot water tank, the water cooled in a cold water tank, or the like with one pump, and can lower the costs of products.

## Description

### Technical Field

The present invention relates to a water storage and discharge apparatus capable of dispensing stored water irrespective of a height of a discharge member such as a cock, a faucet, or the like.

### Background Art

A water storage and discharge apparatus is a device dispensing stored water to the outside thereof.

Such a water storage and discharge apparatus may be provided in a water purifier, or the like. A water storage and discharge apparatus provided in a water purifier stores water which has been filtered through a filter unit including a plurality of water purifying filters and dispenses the water to be supplied to a user.

To this end, a water storage and discharge apparatus includes a storage tank storing water, and a discharge member such as a cock, a faucet, or the like, connected to the storage tank and dispensing water stored in the storage tank.

Meanwhile, in the case of a water storage and discharge apparatus provided in a reverse osmosis type water purifier, since a relatively small amount of water is filtered through a filter unit, a storage tank to collect filtered water and dispense the same to the outside is essential. Also, since the storage tank does not have a pressurizing unit such as a pump, or the like, the discharge member is required to be positioned on a lower end portion of the storage tank or thereunder in order to allow water which has been introduced to and stored in the storage tank to be dispensed through the discharge member. Namely, water stored in the storage tank is dispensed to the outside through the discharge member by a difference in height between water stored in the storage tank and the discharge member.

Thus, the height of the discharge member is limited, to allow water stored in the storage tank to be dispensed through the discharge member. Namely, the discharge member is not free in terms of the height thereof when positioned in the water storage and discharge apparatus. Also, since the height of the discharge member is limited, the discharge member may be positioned at an inconvenient height for a user, forcing the user to bend down toward the water dispensing device.

Meanwhile, a hot water storage tank having a heater or a cold water storage tank having an evaporator may be connected to the storage tank. In the case that a hot water storage tank or a cold water storage tank is connected to the storage tank, if a discharge member is disposed in a high position, respective outlet pipes through which, water, heated water and cooled water flow out require a pump in order to dispense water, heated water, or cooled water through the discharge member. This increases product unit manufacturing costs.

### Disclosure

### Technical Problem

The present invention is based upon recognition of at least any one of the requirements or problems in relation to the related art water storage and discharge apparatus.

An aspect of the present invention provides a water storage and discharge apparatus that dispenses stored water to the outside irrespective of a height of a discharge member such as a cock, a faucet, or the like.

Another aspect of the present invention provides a water storage and discharge apparatus that allows a discharge member such as a cock, a faucet, or the like, to be freely set in terms of the height thereof.

Another aspect of the present invention provides a water storage and discharge apparatus that includes a discharge member such as a cock, a faucet, or the like, positioned at a convenient height for a user.

Another aspect of the present invention provides a water storage and discharge apparatus that dispenses water stored in a storage tank, water heated in a hot water storage tank, water cooled in a cold water storage tank, and the like, using a single pump.

Another aspect of the present invention provides a water storage and discharge apparatus that incurs low product unit cost.

### Technical Solution

A water storage and discharge apparatus in relation to an embodiment for accomplishing at least one of the objects may have the following characteristics.

Embodiments of the present invention are based on enabling a storage tank to maintain a level of pressure equal to or higher than atmospheric pressure to allow water stored in the storage tank to be expelled or dispensed to the outside regardless of a height of a discharge member such as a cock, a faucet, or the like.

According to an aspect of the present invention, there is provided a water storage and discharge apparatus including: a storage tank to which an inlet pipe allowing water to be introduced therethrough is connected, storing introduced water, and to which an outlet pipe allowing stored water to flow out therethrough is connected; a discharge member connected to the outlet pipe and dispensing water stored in the storage tank to the outside; and a pressure maintenance means including a pump connected to the storage tank and a pressure sensor sensing a pressure of the interior of the storage tank, such that the pressure of the interior of the storage tank is maintained to be equal to or higher than atmospheric pressure to allow water to be dispensed through the discharge member regardless of a height thereof.

The pressure sensor may be configured to externally indicate a sensed pressure of the interior of the storage tank, and the pump may be a hand pump manually supplying ambient air to the storage tank.

The water storage and discharge apparatus may further include a controller electrically connected to the pump and the pressure sensor and operating the pump according to a pressure sensed by the pressure sensor, and the pump may be an automatic pump operated by the controller to supply ambient air to the storage tank.

An air vent valve may be connected to the storage tank to expel air present in the storage tank to the outside when water is introduced to the storage tank.

A check valve may be provided in an air supply pipe connecting the pump and the storage tank.

The air supply pipe connecting the pump and the storage tank may include an air filter for filtering air.

### Advantageous Effects

As set forth above, according to embodiments of the invention, stored water can be dispensed to the outside irrespective of a height of a discharge member such as a cock, a faucet, or the like.

Also, a height of the discharge member such as a cock, a faucet, or the like, can be freely set.

In addition, the discharge member such as a cock, a faucet, or the like, may be positioned at a convenient height for a user.

In addition, water stored in a storage tank, water heated in a hot water storage tank, water cooled in a cold water storage tank, and the like, may be dispensed using a single pump.

In addition, product unit cost can be reduced.

### DESCRIPTION OF DRAWINGS

FIG. 1 is a view illustrating a water storage and discharge apparatus according to an embodiment of the present invention; and

FIGS. 2 through 4 are views illustrating an operation of the water storage and discharge apparatus provided in a water purifier according to an embodiment of the present invention.

### Mode for Invention

In order to help understand features of the present invention, a water storage and discharge apparatus according to embodiments of the preset invention will be described in detail.

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like components.

Embodiments related to the present invention are based on enabling a storage tank to maintain a level of pressure equal to or higher than atmospheric pressure to allow water stored in the storage tank to be expelled or dispensed to the outside regardless of a height of a discharge member such as a cock, a faucet, or the like.

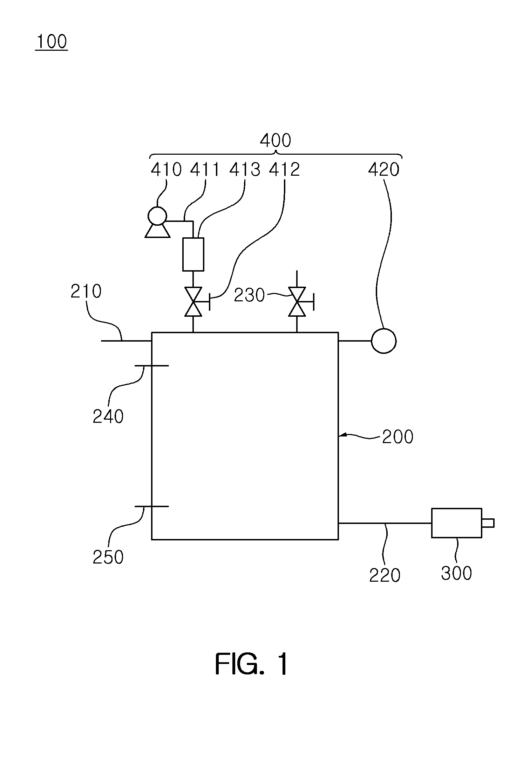

As shown in an embodiment illustrated in FIG. 1, a water storage and discharge apparatus 100 according to the present invention may include a storage tank 200, a discharge member 300, and a pressure maintenance means 400.

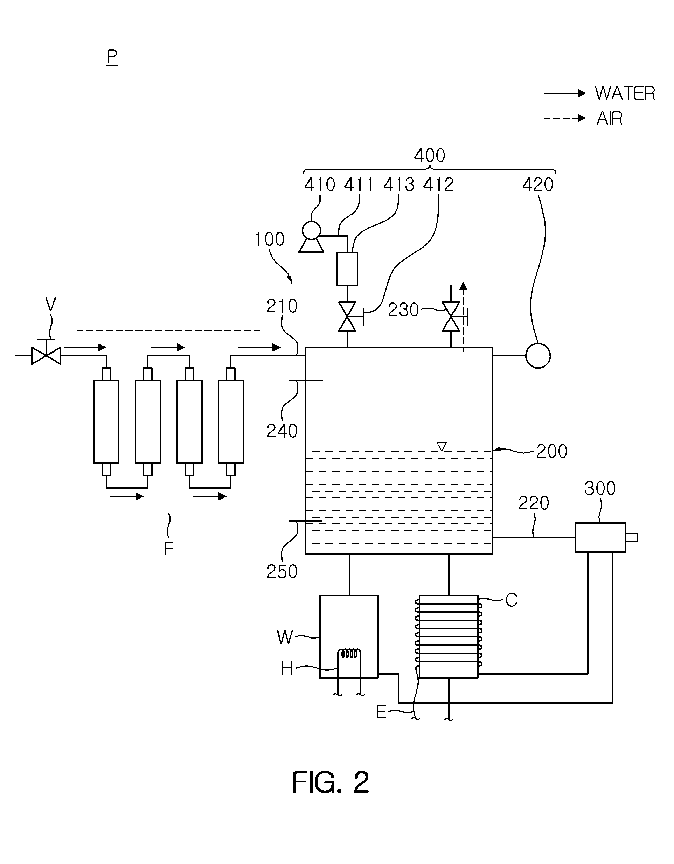

As shown in the embodiment illustrated in FIG. 1, an inlet pipe 210 may be connected to the storage tank 200. The inlet pipe 210 may be connected to a water source (not shown). Thus, water supplied from the water source may be introduced to and stored in the storage tank 200. For example, when the water storage and discharge apparatus 100 is provided in a water purifier P, as illustrated in FIGS. 2 through 4, the water source may be a filter unit F including a plurality of water purifying filters to filter introduced water. Water filtered by the filter unit F may be introduced to the storage tank 200 through the inlet pipe 210 and stored therein. However, the water source is not limited to the filter unit F as illustrated and any device that may be connected to the inlet pipe 210 to supply water may be used as a water source.

As shown in the embodiment illustrated in FIG. 1, an outlet pipe 220 may be connected to the storage tank 200. Water stored in the storage tank 200 may flow out through the outlet pipe 220. Also, an air vent valve 230 may be connected to the storage tank 200 as shown in the embodiment illustrated in FIG. 1. When water is introduced to the storage tank 200, air present in the storage tank 200 may be expelled by the air vent valve 230. Accordingly, water may be smoothly introduced to the storage tank 200 through the inlet pipe 210. As shown in the illustrated embodiment, a full water level sensor 240 and a low water level sensor 250 are provided to sense a full water level and a low water level of the storage tank 200.

As shown in the embodiment illustrated in FIG. 1, the discharge member 300 may be connected to the outlet pipe 220. Thus, water stored in the storage tank 200 flowing out through the outlet pipe 220 may be dispensed through the discharge member 300 so as to be supplied to a user. As illustrated in FIGS. 2 through 4, when the discharge member 300 is provided in the water purifier P, the discharge member 300 may be a cock, a faucet, or the like. However, the discharge member 300 is not limited thereto and any element which is connected to the outlet pipe 220 and dispenses water stored in the storage tank 200 to the user may be used as the discharge member.

As shown in the embodiment illustrated in FIG. 1, the pressure maintenance means 400 may include a pump 410 connected to the storage tank 200 and a pressure sensor 420 sensing a pressure within the storage tank 200. A pressure equal to or higher than atmospheric pressure may be maintained in the storage tank 200 by means of the pressure maintenance means 400. Thus, regardless of a height of the discharge member 300 such as a cock, faucet, or the like, water may be dispensed through the discharge member 300.

The pressure sensor 420 may be configured to externally indicate a sensed pressure within the storage tank 200. For example, the pressure sensor 420 may be configured to externally indicate a sensed pressure within the storage tank 200 by rotating a hand (or a needle) or externally indicate a number corresponding to a sensed pressure within the storage tank 200. Thus, a user may be able to ascertain a pressure within the storage tank 200 by the pressure sensor 420 having the foregoing configuration. In such a case, the pump 410 may be a hand pump. Accordingly, ambient air may be passively supplied to the storage tank 200 by the user. Namely, when the sensed pressure of the interior of the storage tank 200 indicated by the pressure sensor 420 is below atmospheric pressure or a predetermined pressure, the user may manually operate the pump 410. Then, ambient air may be supplied to the storage tank 200 according to the user's operation of the pump 410 to increase pressure within the storage tank 200 to atmospheric pressure, the predetermined pressure or higher.

Besides, the water storage and discharge apparatus 100 according to an embodiment of the present invention may further include a controller (not shown). The controller may be electrically connected to the pump 410 and the pressure sensor 420. Thus, the controller may operate the pump 410 according to the pressure of the interior of the storage tank 200 sensed by the pressure sensor 420. In this case, the pump 410 may be an automatic pump operated by the controller to supply ambient air to the storage tank 200. Thus, when the pressure of the interior of the storage tank 200 sensed by the pressure sensor 420 is below atmospheric pressure or a predetermined pressure, the controller may operate the pump 410. Thus, ambient air may be supplied to the storage tank 200 according to the operation of the pump 410 by the controller to increase the pressure of the interior of the storage tank 200 to atmospheric pressure or the predetermined pressure or higher.

Meanwhile, when ambient air is supplied to the storage tank by the pump 410, the air vent valve 230 connected to the storage tank 200 is shut.

As shown in the embodiment illustrated in FIG. 1, the pump 410 and the storage tank 200 may be connected by the air supply pipe 411. Also, as shown in the illustrated embodiment, a check valve 412 may be provided in the air supply pipe 411. By the presence of the check valve 412, air may be supplied to the storage tank 200 from the outside, but air may not be expelled to the outside from the storage tank 200. Thus, air may be smoothly supplied to the storage tank 200 by virtue of the pump 410.

Also, as shown in the embodiment illustrated in FIG. 1, an air filter 413 for filtering air may be provided in the air supply pipe 411. Thus, as described above, when ambient air is supplied to the storage tank 200 by the pump 410, air may be filtered by the air filter 413. Thus, the storage tank 200 can be prevented from being contaminated due to an introduction of external contaminants thereto.

An operation of the water storage and discharge apparatus 100 according to an embodiment of the present invention will be described in detail with reference to FIGS. 2 through 4.

Hereinafter, a case in which the water storage and discharge apparatus 100 according to an embodiment of the present invention is provided in the water purifier P will be taken as an example. When the water storage and discharge apparatus 100 is provided in the water purifier P according to an embodiment of the present invention, as illustrated in FIGS. 2 through 4, the inlet pipe 210 of the storage tank 200 is connected to the filter unit F of the water purifier P which includes a plurality of water purifying filters to filter introduced water.

Meanwhile, as illustrated in FIGS. 2 through 4, the storage tank 200 may be connected to a hot water storage tank W having a heater H to heat introduced water or a cold water storage tank C having an evaporator E to cool introduced heat. Thus, water stored in the storage tank 200, water heated by the hot water storage tank W, or water cooled in the cold water storage tank C may be dispensed to the outside through the discharge member 300 by the single pump 410. However, besides the hot water storage tank W or the cold water storage tank C as illustrated in FIGS. 2 through 4, an ionized water storage tank (not shown), or the like, may also be connected to the storage tank 200.

First, when a low water level of the storage tank 200 is sensed by the low water level sensor 250, an opening and closing valve (V) is opened by the user or the controller (not shown) connected to the low water level sensor 250. Accordingly, as illustrated in FIG. 2, water is introduced to the filter unit F and filtered by the plurality of water purifying filters included in the filter unit F. The filtered water is introduced to the storage tank 200 through the inlet pipe 210 connected to the filter unit F and stored therein. As described above and illustrated in FIG. 2, while water introduced through the inlet pipe 210 is stored in the storage tank 200, the air vent valve 230 connected to the storage tank 200 is kept open by the user or the controller. Accordingly, air present in the storage tank 200 is expelled to the outside, and thus, water may be smoothly introduced to the storage tank 200 through the inlet pipe 210.

Meanwhile, water introduced to and stored in the storage tank 200 may be introduced to the hot water storage tank W so as to be heated by the heater H or may be introduced to the cold water storage tank C so as to be cooled by the evaporator E.

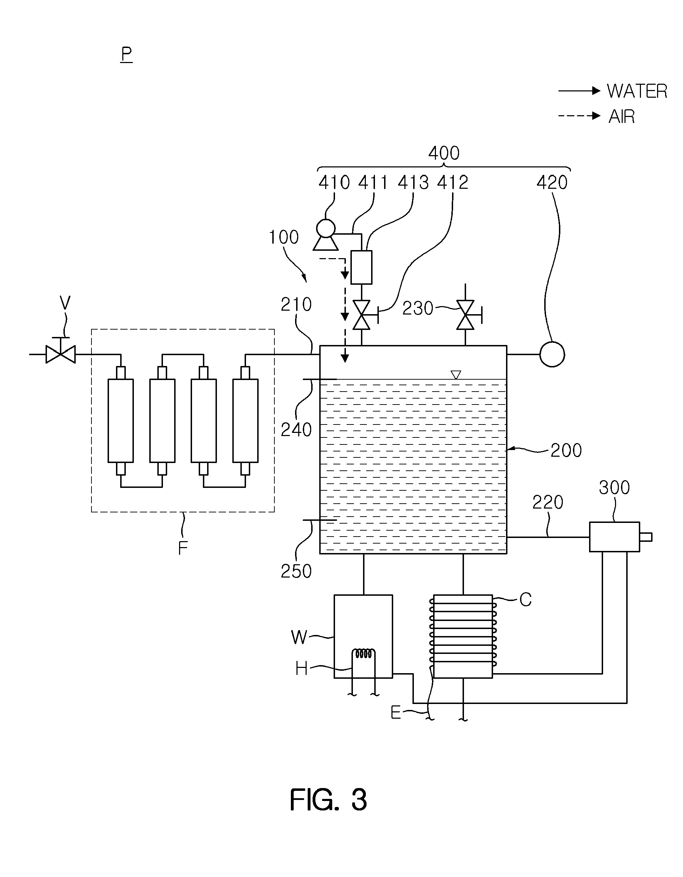

When the water introduced through the inlet pipe 210 and stored in the storage tank 200 reaches a full water level of the storage tank 200 as illustrated in FIG. 3, the full water level sensor 240 senses it. Accordingly, the opening and closing valve V and the air vent valve 230 are shut by the user or a controller connected to the full water level sensor 240.

When a pressure of the interior of the storage tank 200 indicated or sensed by the pressure sensor 420 is below atmospheric pressure or a predetermined pressure, the pump 410 is operated by the user or the controller. Accordingly, ambient air is supplied into the storage tank 200 as illustrated in FIG. 3. Accordingly, the pressure within the storage tank 200 is increased. When the increased pressure within the storage tank 200 reaches atmospheric pressure or the predetermined pressure or higher, it is indicated or sensed by the pressure sensor 420. Then, the user or the controller stops operation of the pump 410. Thus, the pressure within the storage tank 200 may be equal to or higher than atmospheric pressure or the predetermined pressure.

Meanwhile, as described above, the check valve 412 may be provided in the air supply pipe 411 connecting the pump 410 and the storage tank 200. Thus, air in the interior of the storage tank 200 cannot be expelled to the outside through the air supply pipe 411. Also, the air supply pipe 411 may include the air filter 413. Thus, when ambient air is supplied to the storage tank 200 by the pump 410, the ambient air may be filtered by the air filter 413 and supplied to the storage tank 200. Thus, external contaminants cannot be introduced to the storage tank 200, and thus, the storage tank 200 can be prevented from being contaminated.

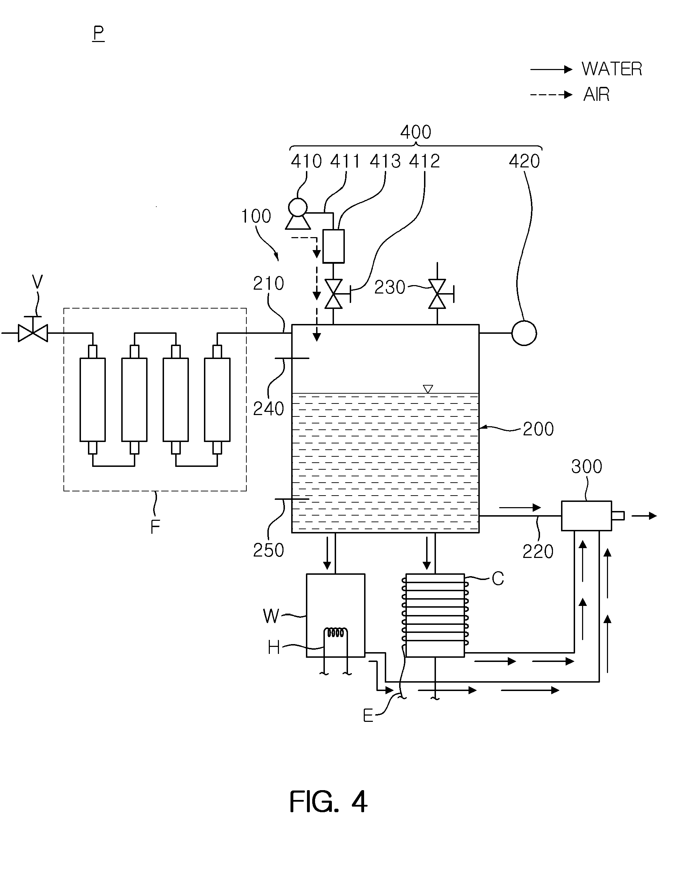

Thereafter, when the discharge member 300 is opened by the user or the controller, as illustrated in FIG. 4, water stored in the storage tank 200 may be dispensed to the outside through the discharge member 300 by the pressure of the interior of the storage tank 200 so as to be supplied to the user.

Also, water heated in the hot water storage tank W or water cooled in the cold water storage tank C may also be dispensed by the pressure of the interior of the storage tank 200 to the outside through the discharge member 300 and supplied to the user.

Meanwhile, as mentioned above, while water stored in the storage tank 200, water heated in the hot water storage tank W, or water cooled in the cold water storage tank C is being dispensed through the discharge member 300, a pressure of the storage tank 200 sensed by the pressure sensor 420 may be lower than atmospheric pressure or the predetermined pressure. In this case, as illustrated in FIG. 4, the pump 410 is operated by the user or the controller to supply ambient air to the storage tank 200 to increase the pressure of the interior of the storage tank 200 to atmospheric pressure or the predetermined pressure or higher. Accordingly, water stored in the storage tank 200, water heated in the hot water storage tank W, or water cooled in the cold water storage tank C may be dispensed through the discharge member 300, regardless of the height of the discharge member 300.

While water stored in the storage tank 200 is being dispensed through the discharge member 300, when a low water level of the storage tank 200 is sensed by the low water level sensor 250, the discharge member 300 is shut and the opening and closing valve V and the air vent valve 230 are opened by the user or the controller. Accordingly, air present within the storage tank 200 is expelled to the outside and water is introduced to the storage tank 200 and stored therein.

As described above, when the water storage and discharge apparatus 100 according to an embodiment of the present invention is used, stored water may be dispensed to the outside irrespective of the height of the discharge member 300 such as a cock, a faucet, or the like, and thus, the height of the discharge member 300 such as a cock, a faucet, or the like, may be freely set and the discharge member 300 such as a cock, a faucet, or the like, may be positioned at a convenient height for the user.

Also, water stored in the storage tank 200, water heated in the hot water storage tank W, water cooled in the cold water storage tank C, or the like, may be dispensed by the single pump 410 and product unit cost can be reduced.

The water storage and discharge apparatus according to embodiments of the present invention as described above is not limited in its application of configurations and methods, but the entirety or a portion of the embodiments may selectively be combined to be configured to have various forms.

While the present invention has been shown and described in connection with the embodiments, it will be apparent to those skilled in the art that modifications and variations can be made without departing from the spirit and scope of the invention as defined by the appended claims.

## Claims

1. A water storage and discharge apparatus comprising:
a storage tank to which an inlet pipe allowing water to be introduced therethrough is connected, storing introduced water, and to which an outlet pipe allowing stored water to flow out therethrough is connected;
a discharge member connected to the outlet pipe and dispensing water stored in the storage tank to the outside; and
a pressure maintenance means including a pump connected to the storage tank and a pressure sensor sensing a pressure of the interior of the storage tank, such that the pressure of the interior of the storage tank is maintained to be equal to or higher than atmospheric pressure to allow water to be dispensed through the discharge member regardless of a height thereof.

2. The water storage and discharge apparatus of claim 1, wherein the pressure sensor is configured to externally indicate a sensed pressure of the interior of the storage tank, and the pump is a hand pump manually supplying ambient air to the storage tank.

3. The water storage and discharge apparatus of claim 1, further comprising a controller electrically connected to the pump and the pressure sensor and operating the pump according to a pressure sensed by the pressure sensor, wherein the pump is an automatic pump operated by the controller to supply ambient air to the storage tank.

4. The water storage and discharge apparatus of claim 1, wherein an air vent valve is connected to the storage tank to expel air present in the storage tank to the outside when water is introduced to the storage tank.

5. The water storage and discharge apparatus of claim 1, wherein a check valve is provided in an air supply pipe connecting the pump and the storage tank.

6. The water storage and discharge apparatus of claim 1 or claim 5, wherein the air supply pipe connecting the pump and the storage tank includes an air filter for filtering air.
